# EUROPEAN PATENT SPECIFICATION

(11) **EP 2 702 197 B1**
(45) Date of publication and mention of the grant of the patent: **21.09.2016**
(21) Application number: 12718866.2
(22) Date of filing: 27.04.2012
(51) Int. Cl.: D06F 39/12, A47B 91/02, F16M 7/00

(54) **APPLIANCE LEG**
HAUSGERÄTBEIN
JAMBE D'UN APPAREIL DOMESTIQUE

(30) Priority: 28.04.2011 ES 201100466 P
(43) Date of publication of application: 05.03.2014
(73) Proprietor: Illinois Tool Works Inc., Glenview, IL 60025 (US)
(72) Inventor: RODÓ SAÑÉ, Antoni, 8230 Barcelona (ES)
(74) Representative: Canela Giménez, Teresa
(86) International application number: PCT/US2012/035387
(87) International publication number: WO 2012/149271

(56) References cited:
- DE-A1- 3 306 244
- DE-A1- 4 329 176
- US-A1- 2002 109 054

## Description

### FIELD OF THE INVENTION

The present invention comprises an appliance leg wherein both the threaded tube and the base have been developed to improve the performance thereof.

### BACKGROUND

Appliance legs are known which are realized by means of a solid screw and an overinjected rubber base.

This simple and economic disposition is not free from problems being more evident in appliances which, as a consequence of the vibrations thereof, subject the legs thereof to greater stresses, such as the case of washing machines. In this manner, the appliance having been installed in its location, for example a washing machine, the conditions of use thereof cause considerable shaking and vibration to be transmitted to the points of support thereof, resulting in the threads of the legs becoming loosened, rendering the appliance unleveled and unbalanced, together with the additional disadvantage of contributing to damage to the moving parts thereof when rotations of the motor thereof occur in an inappropriate plane of rotation.

DE3306244 discloses an appliance leg with a base with a troncoconical surface connected to a nut, for their part DE4329176 shows a screw supported by a tronconical base, both relying on a flexible block. US2002/109054 is a levelling mount for equipment with a socket where engages a swivel ball that is the head of a screw with a jam nut. All these embodiments can be made simplified and improved by the present invention, as discussed.

Furthermore, the known disposition of appliance legs transmits the vibrations thereof with great facility to the surroundings thereof because the supports of the appliance legs scarcely dispose of damping.

Consequently, an object of the present invention is to provide appliance legs with anti-vibration damping.

Another of the objects of the present invention is that the leg obtained not be costly to manufacture.

These and other objects of the present invention shall become clearer through the description following below.

### BRIEF DESCRIPTION OF THE INVENTION

The present invention develops an appliance leg of the type including a threaded tube which at the extremity thereof has an element flexible to a certain extent, such as a rubber base, wherein the join between the threaded tube and the base is realized through the intermediary of a flexible troncoconical surface of the Belleville washer type, said surface having a hexagonal head, being inserted through its lower periphery into the block of the appliance leg.

The threaded tube has two sections, one planar or possessing normal screw threads, together with another possessing approximately elliptical screw threads, permitting the antivibration threading of the assembly, securing the join.

In this manner, the objectives envisaged for the invention have been realized, these being to obtain an economic appliance leg but at the same time offering high anti-vibration performance, resulting in a part particularly suitable for washing machines and other appliances experiencing strong shaking.

### BRIEF EXPLANATION OF THE DRAWINGS

For the better comprehension of the invention the same is accompanied by a sheet of drawings provided solely to illustrate and not limit the invention.

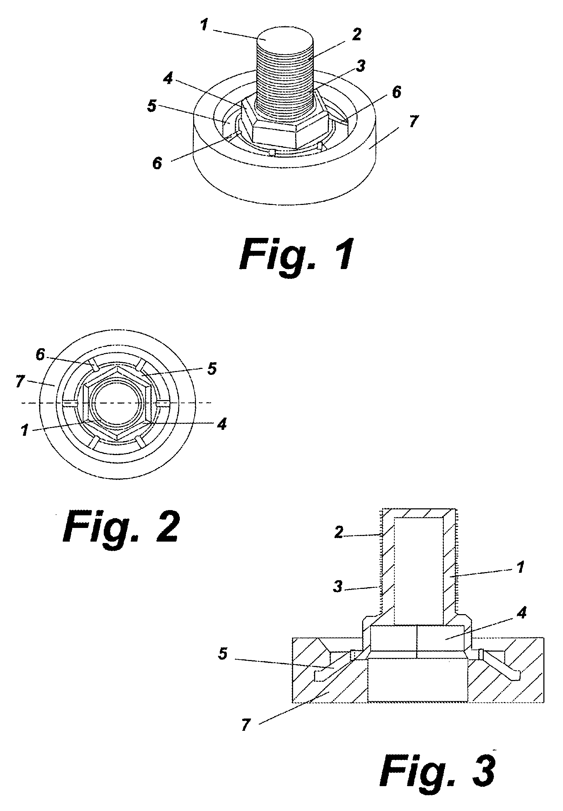

Figure 1 shows a perspective representation of an appliance leg according to the invention in one of its preferential realizations.
Figure 2 shows an upper view of the appliance leg of the preceding figure.
Figure 3 shows a cross-sectional elevation of the preceding figure.

### DETAILED EXPLANATION OF THE INVENTION

The present invention consists of an appliance leg of the type having a threaded tube (1) terminating in a support block or base (7), wherein said threaded tube has, from the upper section of the part towards said support base (7), a first section (2) possessing planar screw threads and a second section (3) possessing approximately elliptical screw threads.

Said approximately elliptical section (3) is configured to enforce the firm securing of the threaded elements thereof, preventing accidental unscrewing due to vibrations.

Upon said approximately elliptical section (3) is disposed a troncoconical flexible surface (5), being inserted into, embedded in, the base (7) of the appliance leg.

In the preferential realization of the invention said base (7) is realized in hard thermoplastic material possessing nevertheless a certain degree of elasticity.

The join zone of the part of the appliance leg forming said washer (5) and said threaded tube is realized in hexagonal form (4) permitting utilization of a conventional tool for threading the appliance leg.

Said surface or washer (5), as the assembly of the leg with the exception of the base (7), is made of metal and may have structural reinforcement ribbing (6).

The constructional disposition of the present invention, as becomes apparent from the preceding explanation and from the figures, permits a highly flexible response, absorbing vibrations from the appliance whilst providing firm rugged support for the weight of said appliance.

As a consequence of the parts and materials of which it is composed, it is an economically manufactured part, in this manner realizing all the objectives proposed.

It goes without saying that in the present case there may be variations, in respect of details of finish or shape, that do not modify the essence of the invention.

## Claims

1. APPLIANCE LEG of the type having a threaded tube (1) terminating in a support block or base (7), WHICH COMPRISES a flexible troncoconical surface (5) joining said threaded tube (1) and said support base (7), where the zone joining the section of the appliance leg forming said surface (5) and said threaded tube is realized in a hexagonal shape (4); **characterised in that** said threaded tube (1) has, from the upper portion of the part towards said support base (7), a first section (2) possessing planar threads and a second section (3) possessing approximately elliptical threads.

2. APPLIANCE LEG as claimed in the foregoing claims, WHEREIN said surface (5) has structural reinforcement ribbing (6).

3. APPLIANCE LEG as claimed in any of the foregoing claims, WHEREIN said flexible troncoconical surface (5) is inserted into, embedded in, said support base (7).

4. APPLIANCE LEG as claimed in any of the foregoing claims, WHEREIN said surface (5), said hexagonal zone (4) and said threaded tube (1) are made of metal.

## Patentansprüche

1. Gerätebein der Art mit einem Gewinderohr (1), das in einem Stützblock oder einer Stützbasis (7) endet, umfassend eine flexible kegelstumpfförmige Fläche (5), die das Gewinderohr (1) und die Stützbasis (7) verbindet, wobei der Bereich, der die Sektion des Gerätebeins, die die Fläche (5) bildet, und das Gewinderohr verbindet, in einer hexagonalen Gestalt (4) ausgeführt ist, **dadurch gekennzeichnet, dass** das Gewinderohr (1) vom oberen Abschnitt des Teils zu der Stutzbasis (7) hin eine erste Sektion (2) mit einem planaren Gewinde und eine zweite Sektion (3) mit einem ungefähr elliptischen Gewinde hat.

2. Gerätebein nach dem vorhergehenden Anspruch, wobei die Fläche (5) eine strukturelle Verstarkungsrippung (6) hat.

3. Gerätebein nach einem der vorhergehenden Ansprüche, wobei die flexible kegelstumpfförmige Fläche (5) in die Stützbasis (7) eingeführt, eingebettet ist.

4. Gewätebein nach einem der vorhergehenden Ansprüche, wobei die Flache (5), der hexagonale Bereich (4) und das Gewinderohr (1) aus Metall hergestellt sind.

## Revendications

1. Pied d'appareil du type comportant un tube fileté (1) se terminant par un bloc ou une base de support (7), qui comprend une surface tronconique souple (5) reliant ledit tube fileté (1) et ladite base de support (7), la zone reliant la section du pied d'appareil formant ladite surface (5) et ledit tube fileté étant réalisée sous une forme hexagonale (4) ; **caractérisé en ce que** ledit tube fileté (1) comporte, en partant de la partie supérieure de la pièce en direction de ladite base de support (7), une première section (2) possédant des filets plats et une seconde section (3) possédant des filets approximativement elliptiques.

2. Pied d'appareil selon la revendication précédente, dans lequel ladite surface (5) comporte un nervurage de renforcement structurel (6).

3. Pied d'appareil selon l'une quelconque des revendications précédentes, dans lequel ladite surface tronconique souple (5) est insérée dans, encastrée dans, ladite base de support (7).

4. Pied d'appareil selon l'une quelconque des revendications précédentes, dans lequel ladite surface (5), ladite zone hexagonale (4) et ledit tube fileté (1) sont constitués de métal.
